# FASCICULE DE BREVET EUROPEEN

(11) **EP 2 220 146 B1**
(45) Date de publication et mention de la délivrance du brevet: **05.09.2018**
(21) Numéro de dépôt: 08865864.6
(22) Date de dépôt: 09.12.2008
(51) Int. Cl.: C08J 3/22, C08K 3/26, G02B 1/04, C08J 5/00, C08L 69/00, C08L 33/12, C08L 25/06, B82B 3/00, G02C 7/04, A42B 3/22, B60J 1/00

(54) **PROCÉDÉ DE PRÉPARATION D'UN MATÉRIAU POLYMÈRE TRANSPARENT COMPRENANT UN POLYCARBONATE THERMOPLASTIQUE ET DES NANOPARTICULES MINÉRALES**
VERFAHREN ZUR HERSTELLUNG EINES TRANSPARENTEN POLYMERMATERIALS MIT EINEM THERMOPLASTISCHEN POLYCARBONAT UND MINERALISCHEN NANOPARTIKELN
METHOD OF PREPARING A TRANSPARENT POLYMER MATERIAL COMPRISING A THERMOPLASTIC POLYCARBONATE AND MINERAL NANOPARTICLES

(30) Priorité: 13.12.2007 FR 0759808
(43) Date de publication de la demande: 25.08.2010
(73) Titulaire: Essilor International, 94220 Charenton-le-Pont (FR); Renault s.a.s., 92100 Boulogne Billancourt (FR); Imerys PCC France, 13200 Arles (FR)
(72) Inventeur: BOUCHER, Virginie, F-59652 Villeneuve D'ascq Cedex (FR); ROOS, Alexandra, F-94220 Charenton Le Pont (FR); DUQUESNE, Sophie, F-59652 Villeneuve D'ascq Cedex (FR); BOURBIGOT, Serge, F-59652 Villeneuve D'ascq Cedex (FR); MEYNIE, Laure, F-75015 Paris (FR); CAVALIER, Karine, F-13200 Arles (FR); SY, Didier, F-13129 Salin De Giraud (FR); LACROIX, Marc, B-1348 Louvain-la-neuve (BE)
(74) Mandataire: Peguet, Wilfried
(86) Numéro de dépôt international: PCT/FR2008/052251
(87) Numéro de publication internationale: WO 2009/080974

(56) Documents cités:
- EP-A- 1 217 030
- WO-A-2007/043496
- US-A1- 2006 217 478
- US-A1- 2007 042 137
- US-A1- 2007 142 535
- WANG ET AL: "Rheology enhancement of polycarbonate/calcium carbonate nanocomposites prepared by melt-compounding" MATERIALS LETTERS, NORTH HOLLAND PUBLISHING COMPANY. AMSTERDAM, NL, vol. 60, no. 8, 1 avril 2006 (2006-04-01), pages 1035-1038, XP005248979 ISSN: 0167-577X
- DATABASE WPI Week 200660 Thomson Scientific, London, GB; AN 2006-580349 XP002484457 & JP 2006 199850 A (SUMITOMO METAL MINING CO) 3 août 2006 (2006-08-03)
- DATABASE CA [Online] CHEMICAL ABSTRACTS SERVICE, COLUMBUS, OHIO, US; CHANG, SHIH-HSIN ET AL: "Polymer master batch containing metal nanoparticles and its production" XP002484455 extrait de STN Database accession no. 2006:1315760 & TW 251 603 B (CHINA TEXTILE INSTITUTE, TAIWAN) 21 mars 2006 (2006-03-21)
- DATABASE CA [Online] CHEMICAL ABSTRACTS SERVICE, COLUMBUS, OHIO, US; CAO, JIANJUN ET AL: "Functional nanocomposite master batch for sunshine plate (transparent polycarbonate plate) and its preparation" XP002484456 extrait de STN Database accession no. 2006:68308 & CN 1 631 975 A (PANZHIHUA IRON AND STEEL RESEARCH INSTITUTE, PANGANG GROUP, PEOP. REP.) 29 juin 2005 (2005-06-29)

## Description

La présente invention se rapporte à un procédé de préparation d'un matériau polymère transparent comprenant un polycarbonate thermoplastique et des nanoparticules, ainsi qu'à un matériau polymère transparent obtenu par ledit procédé.

Elle s'applique typiquement, mais non exclusivement, aux domaines de l'optique, notamment aux articles optiques du type lentille optique d'instrumentation de visée, visière de casque ou lentille ophtalmique, et aux articles optiques du type vitrage automobile.

Plus particulièrement, on entend par « lentille ophtalmique » des lentilles s'adaptant notamment à une monture de lunette, ayant pour fonction de protéger l'oeil et/ou de corriger la vue, ces lentilles étant choisies parmi les lentilles afocales, unifocales, bifocales, trifocales et progressives.

On entend par « vitrage automobile » non seulement des éléments extérieurs transparents de carrosserie tels que par exemple des lunettes arrières, des custodes, des vitres latérales, des toits vitrés, des glaces de projecteurs ou des feux, mais également des éléments intérieurs transparents d'habitacle tels que par exemple des vitres de tableau de bord, des cadrans ou des écrans.

Le polycarbonate présente des avantages qui le rendent particulièrement intéressant pour l'optique notamment une excellente transparence, une excellente résistance aux chocs, un indice de réfraction élevé et une grande légèreté. En revanche, il présente pour principaux points faibles de ne pas être très rigide et d'être très sensible aux rayures et à l'abrasion.

Pour améliorer les propriétés mécaniques d'un polymère, notamment la rigidité et la résistance à l'abrasion et aux rayures, il est connu d'ajouter des nanoparticules minérales au polymère. Typiquement, ces nanoparticules sont incorporées directement au polymère mis en oeuvre à l'état fondu. Toutefois, ce procédé appliqué au polycarbonate thermoplastique ne garantit pas une bonne dispersion des nanoparticules dans la matrice de polycarbonate thermoplastique et entraine bien souvent une dégradation de ladite matrice.

Le matériau ainsi obtenu est alors moins transparent et moins résistant aux chocs comparativement à un matériau polycarbonate thermoplastique ne renfermant pas de nanoparticules.

JP2006199850 décrit un procédé de préparation d'un polymère transparent impliquant la mise en oeuvre d'un mélange-maître.

La présente invention a pour but de fournir un procédé de préparation d'un matériau polymère transparent comprenant un polycarbonate thermoplastique et des nanoparticules qui ne présente pas les inconvénients mentionnés ci-dessus.

Ainsi, l'invention a pour objet un procédé de préparation d'un matériau polymère transparent comprenant les étapes suivantes :
i. mélanger :
   - des nanoparticules minérales, dont la dimension est définie dans la description, choisies parmi les nanoparticules de carbonates de métaux alcalino-terreux, de sulfates de métaux alcalino-terreux, d'oxydes métalliques, de dioxyde de silicium, et de siloxanes, et
   - une composition A comprenant au moins un polymère thermoplastique à l'état fondu choisi parmi le polycarbonate (PC), le polystyrène (PS) et le polyméthacrylate de méthyle (PMMA),
   pour obtenir un mélange-maître, le mélange de l'étape i comprenant au moins 25 % et au plus 75 % en masse desdites nanoparticules minérales, et
ii. mélanger le mélange-maître, obtenu à l'étape i, à une composition B comprenant une matrice de polycarbonate thermoplastique (mPC) à l'état fondu, pour obtenir un matériau polymère transparent comprenant au plus 10 % en masse desdites nanoparticules minérales, de préférence au plus 5 % en masse desdites nanoparticules minérales.

Le procédé de préparation selon la présente invention permet de limiter significativement la dégradation de la matrice mPC lors de l'incorporation des nanoparticules. Il permet également de limiter le phénomène d'agrégation des nanoparticules lors de leur incorporation dans la matrice mPC garantissant une dispersion homogène desdites nanoparticules dans ladite matrice.

Il permet notamment de conserver au mieux la transmission lumineuse et la résistance aux chocs comparativement à un matériau polycarbonate thermoplastique en tant que tel, et d'améliorer les propriétés mécaniques du matériau polymère transparent lors de l'incorporation des nanoparticules minérales dans la matrice de polycarbonate (mPC).

Le matériau obtenu par le procédé de préparation selon l'invention présente ainsi une rigidité améliorée ainsi qu'une bonne résistance à l'abrasion et à la rayure par rapport à un matériau polycarbonate thermoplastique couramment utilisé dans le domaine de l'optique.

On entend par « matériau polymère transparent » un matériau à travers lequel une image est observée sans perte significative de contraste. En d'autres termes, l'interposition dudit matériau polymère transparent entre une image et un observateur de celle-ci ne réduit pas significativement la qualité de l'image.

On entend par « état fondu » un état dans lequel le polymère thermoplastique de l'étape i ou la matrice de polycarbonate thermoplastique de l'étape ii est dans un état malléable. Cet état malléable, bien connu de l'homme du métier, peut être classiquement atteint lorsque le polymère en question est chauffé à une température supérieure à sa température de transition vitreuse ou température de ramollissement.

Dans le texte de la présente invention, l'expression « comprise entre une valeur x et une valeur y » signifie que les valeurs x et y sont incluses dans cet intervalle de valeurs.

Le polycarbonate (PC) thermoplastique utilisé dans l'étape i et le polycarbonate (mPC) thermoplastique utilisé dans l'étape ii peuvent être identiques ou différents. De préférence, les sources de polycarbonates mis en oeuvre dans l'étape i et dans l'étape ii sont identiques.

Dans le cadre de l'invention, le mélange de l'étape i peut comprendre de préférence au moins 40 % et au plus 60 % en masse de nanoparticules minérales, et encore plus préférentiellement 50 % en masse de nanoparticules minérales.

Les nanoparticules minérales selon la présente invention ont typiquement au moins l'une de leurs dimensions de taille nanométrique (10⁻⁹ mètre).

On entend par le terme « dimension », la dimension moyenne en nombre de l'ensemble des nanoparticules d'une population donnée, cette dimension étant classiquement déterminée par des méthodes bien connues de l'homme du métier.

Selon ces méthodes de détermination de la taille des nanoparticules, la dimension des nanoparticules selon la présente invention fait référence soit au diamètre de Stokes (si la méthode utilisée est celle de la sédimentation par centrifugation et analyse par rayons X), soit au diamètre de diffusion (si la méthode utilisée est celle de la diffusion de la lumière par granulométrie laser), soit au diamètre de diffraction (si la méthode utilisée est celle de la diffraction de la lumière par granulométrie laser), soit à la largeur (I) des nanoparticules définie comme la dimension la plus petite des nanoparticules (si la méthode utilisée est celle de la microscopie électronique, telle que la MEB (Microscopie Electronique à Balayage) ou la MET (Microscopie Electronique en Transmission)), cette dernière méthode étant préférée.

Ces quatre méthodes de détermination de la dimension des nanoparticules peuvent conduire à des résultats sensiblement différents. De ce fait, les résultats obtenus doivent satisfaire à la condition de dimension de taille nanométrique des nanoparticules de l'invention selon au moins l'une des quatre méthodes précédemment citées, de préférence au moins deux de ces méthodes, de préférence au moins trois de ces méthodes, et de façon encore plus préférée, ces quatre méthodes.

La dimension des nanoparticules minérales selon l'invention est notamment d'au plus 400 nm, de préférence d'au plus 300 nm, et plus préférentiellement d'au plus 100 nm.

De façon particulièrement préférée, cette dimension est d'au moins 0,1 nm et d'au plus 80 nm, plus préférentiellement d'au moins 10 nm et d'au plus 70 nm, et par exemple égale à 40 nm.

Les nanoparticules minérales du mélange de l'étape i peuvent également être définies par leur facteur de forme correspondant au rapport entre une certaine « plus grande dimension » (L) d'une particule, communément appelée « longueur », et une certaine « plus petite dimension » de la particule, communément appelée « largeur » ou « diamètre », mentionnée ci-avant par la lettre « I ».

Le facteur de forme est classiquement déterminé par analyse d'images prises par microscopie, en particulier par microscopie électronique (MEB ou MET). La plus grande dimension L ainsi que la plus petite dimension I d'une nanoparticule sont directement mesurées par MEB ou par MET, et permet donc de calculer le rapport L sur I.

Le facteur de forme moyen d'une population de nanoparticules selon la présente invention est défini comme la moyenne en nombre des facteurs de formes de chaque nanoparticule prise individuellement, ou en d'autres termes la moyenne en nombre du rapport de la longueur L sur la largeur I de chaque nanoparticule.

Le facteur de forme des nanoparticules minérales selon la présente invention est égal à 1,0.

De manière avantageuse, les nanoparticules minérales selon la présente invention peuvent notamment subir, préalablement à leur incorporation dans le mélange de l'étape i, un traitement dit « de surface » pour améliorer leur dispersion dans ledit mélange et donc limiter leur agrégation.

A titre d'exemple, le traitement de surface peut consister à préenrober les nanoparticules par une couche d'un polymère du type polyacrylate, polybutadiène greffé anhydride maléique, méthacryl-silane ou amino-silane.

D'autres types de traitement de surface desdites nanoparticules peuvent être envisageables, notamment la fonctionnalisation ou le greffage desdites nanoparticules, ces traitements de surface étant bien connus de l'homme du métier.

Parmi les nanoparticules minérales conformes à la présente invention, les nanoparticules de carbonates de métaux alcalino-terreux peuvent être des nanoparticules de carbonate de calcium, celles de sulfates de métaux alcalino-terreux des nanoparticules de sulfate de baryum, celles d'oxydes métalliques des nanoparticules d'alumine, d'oxyde de zinc, ou de dioxyde de titane, et celles de siloxanes des nanoparticules de silsesquioxanes et plus particulièrement des nanoparticules de Trisilanolphényl Polyhedral SilSesquioxane (TP-POSS). Les nanoparticules minérales préférées sont les nanoparticules de carbonate de calcium.

Afin d'améliorer encore les propriétés mécaniques et optiques du matériau polymère selon la présente invention, le mélange de l'étape ii peut comprendre en outre au moins un antioxydant.

Selon une première variante, la composition B est préparée préalablement à l'étape ii en mélangeant le ou les antioxydants avec la matrice de polycarbonate thermoplastique (mPC) à l'état fondu.

Selon une deuxième variante, la composition A est préparée préalablement à l'étape i en mélangeant le ou les antioxydants avec le polymère thermoplastique à l'état fondu (PC, PS ou PMMA), de préférence avec le polycarbonate (PC).

Selon une troisième variante, le ou les antioxydants peuvent être ajoutés directement lors de l'étape ii, ou en d'autres termes au mélange de l'étape ii.

Selon une quatrième variante, le ou les antioxydants peuvent être ajoutés directement lors de l'étape i, ou en d'autres termes au mélange de l'étape i.

Le ou les antioxydants utilisés dans ces quatre variantes sont au moins partiellement solubles dans la matrice de polycarbonate thermoplastique de l'étape ii, et, selon la deuxième ou la quatrième variante, au moins partiellement solubles dans le polymère thermoplastique de l'étape i.

De manière préférentielle, et notamment lorsque le polymère thermoplastique de la composition A est le polycarbonate, le mélange-maître et la composition B renferment au moins un antioxydant. Le ou les antioxydants présents dans le mélange-maitre et la composition B peuvent être identiques ou différents. De préférence, les antioxydants présents dans le mélange-maitre et la composition B sont identiques.

De manière particulièrement préférée, le ou les agents sont ajoutés aux compositions A et B au cours d'une étape supplémentaire.

Avantageusement, la composition A peut comprendre au plus 15 % en masse d'antioxydant, et plus particulièrement au moins 0,5 % en masse d'antioxydant.

De préférence, la composition A peut comprendre une quantité comprise entre 2 et 12 % en masse d'antioxydant, plus préférentiellement au plus 10 % en masse d'antioxydant, et encore plus préférentiellement de 5 % en masse d'antioxydant.

Avantageusement, la composition B peut comprendre au plus 5 % en masse d'antioxydant, préférentiellement au moins 0,5 % et plus particulièrement au moins 0,1 %.

De préférence, la composition B peut comprendre entre 0,5 et 2 % en masse d'antioxydant.

Ainsi selon le mode de réalisation mis en oeuvre dans le cadre de l'invention, le mélange de l'étape ii peut comprendre au plus 5 % en masse d'antioxydant, et de préférence entre 1 et 2 % en masse d'antioxydant. Au-delà d'une telle quantité d'antioxydant dans le mélange de l'étape ii, le matériau polymère transparent obtenu peut voir ses propriétés mécaniques dégradées.

De ce fait, quelque soit la ou les variantes d'ajout d'antioxydant, le matériau polymère transparent selon la présente invention peut comprendre au plus 5 % en masse d'antioxydant, et de préférence entre 1 et 2 % en masse d'antioxydant afin de garantir le meilleur compromis entre une rigidité optimale et une coloration quasiment inexistante.

Le ou les antioxydants selon l'invention peuvent être tout type d'antioxydants bien connus de l'homme du métier. De préférence, l'antioxydant utilisé comprend un phosphite. A titre d'exemple, on peut citer comme antioxydant l'Ultranox® 626, l'Irgafos® 168 ou l'Irganox® HP2921.

Selon un mode de réalisation particulier, le mélange de l'étape ii peut comprendre en outre un agent compatibilisant, lorsque le mélange de l'étape i comprend le polystyrène (PS) et/ou le polyméthacrylate de méthyle (PMMA).

On entend par « agent compatibilisant » tout élément polymérique ou minéral ayant une certaine affinité du type miscibilité et/ou réactivité avec à la fois le polymère thermoplastique de l'étape i et la matrice mPC. L'agent compatibilisant permet notamment d'améliorer la rigidité du matériau polymère transparent selon la présente invention.

L'agent compatibilisant du type élément polymérique peut être un copolymère à blocs, greffé ou statistique, dont l'un des constituants a une certaine affinité du type miscibilité pour le polymère de l'étape i tandis qu'un autre a une affinité du type miscibilité et/ou réactivité pour la matrice PC. De manière particulièrement préférée, les composants du copolymère compatibilisant sont constitués des mêmes motifs monomères que ceux des polymères à compatibiliser ou du moins, que l'un d'entre eux. A titre d'exemple, l'agent compatibilisant du type élément polymérique est un copolymère du polystyrène, notamment un copolymère de polystyrène et d'anhydride maléique.

Comme agent compatibilisant du type élément minéral, on peut utiliser de manière préférée une montmorillonite naturelle modifiée en surface avec des groupements fonctionnels du type hydroxyles.

Afin de garantir des propriétés mécaniques optimales au matériau polymère transparent selon la présente invention, il est préférable que le mélange de l'étape ii comprenne au plus 5 % en masse d'agent compatibilisant, de préférence entre 0,1 et 2 % en masse d'agent compatibilisant, et encore plus préférentiellement entre 0,3 et 1 % en masse d'agent compatibilisant.

Le procédé de mélange utilisé pour les différentes étapes du procédé de préparation du matériau polymère transparent peut être un procédé d'extrusion. Toutefois, ce procédé n'est nullement limitatif et tout autre procédé bien connu de l'homme du métier peut être utilisé.

Un matériau polymère transparent obtenu par le procédé de préparation défini ci-avant, est également décrit, ledit matériau polymère transparent possédant des propriétés mécaniques et optiques remarquables.

Une première caractéristique technique de ce matériau polymère est qu'il présente une perte de transmission lumineuse, notamment à 650 nm, par rapport à un matériau de référence obtenu uniquement à partir de la matrice de polycarbonate thermoplastique (mPC), d'au plus 25 %, de préférence d'au plus 10 %, et plus préférentiellement comprise entre 1 et 3 %.

Une deuxième caractéristique technique de ce matériau est qu'il présente une augmentation du module de flexion, par rapport à un matériau de référence obtenu uniquement à partir de la matrice de polycarbonate thermoplastique (mPC), d'au moins 10 %, et de préférence comprise entre 20 et 60 %.

Une troisième caractéristique technique de ce matériau est qu'il présente une perte de poids moléculaire, par rapport à un matériau de référence obtenu uniquement à partir de la matrice de polycarbonate thermoplastique (mPC), induite par l'incorporation des nanoparticules minérales, d'au plus 30 %, de préférence d'au plus 20 %, et encore plus préférentiellement d'au plus 10 %.

L'utilisation dudit matériau polymère transparent pour la fabrication d'articles optiques du type lentille optique d'instrumentation de visée, visière de casque ou lentille ophtalmique d'une part, et du type vitrage automobile d'autre part, est également décrite.

A titre d'exemple, l'épaisseur des articles optiques peut être d'au plus 15 mm, de préférence comprise entre 0,1 et 5 mm, et plus préférentiellement comprise entre 0,5 et 4 mm.

Typiquement, l'article optique peut être fabriqué à partir dudit matériau polymère transparent par tout procédé de formage bien connu de l'homme du métier, tel que le thermoformage, l'extrusion, le calandrage, le filage, l'injection, l'injection-compression, ou le moulage par soufflage, l'article optique gardant toutes les propriétés mécaniques et optiques dudit matériau polymère.

D'autres caractéristiques et avantages de la présente invention apparaîtront à la lumière des exemples qui vont suivre, lesdits exemples étant donnés à titre illustratif et nullement limitatif.

### Exemples :

L'origine des différents constituants utilisés est la suivante :
- le polycarbonate utilisé (PC ou mPC), que ce soit dans le mélange de l'étape i ou dans le mélange de l'étape ii, est un polycarbonate thermoplastique référencé Makrolon® Al2647 et commercialisé par la société Bayer AG,
- le polystyrène est Empera® 251N, commercialisé par la société NOVA Innovene International SA,
- le polyméthacrylate de méthyle est commercialisé sous la référence 200336 par la société Sigma-Aldrich Co.
- les nanoparticules sont des particules de carbonate de calcium précipité de dimension d'environ 60 nm, vendues par la société Solvay France sous le nom SOCAL® 31,
- l'antioxydant utilisé dans les différentes étapes du procédé est l'Ultranox® 626, commercialisé par la société Crompton N.V.
- l'agent compatibilisant AgCp1 est le copolymère de polystyrène et d'anhydride maléique renfermant 7 % d'anhydride maléique et commercialisé sous la référence 426946 par la société Sigma-Aldrich Co.
- l'agent compatibilisant AgCm1 est la Cloisite® 20A, commercialisé par la société Southern Clay Products, Inc.
- l'agent compatibilisant AgCm2 est la Cloisite® 30B, commercialisé par la société Southern Clay Products, Inc.

Pour plus de précisions, la dimension des nanoparticules SOCAL® 31 est déterminée par MET avec un grossissement de 40000 sur une vingtaine de clichés en dispersant tout d'abord ces nanoparticules dans de l'éthanol, puis en les plaçant sur une grille de cuivre, et en les recouvrant enfin d'un film polymère amorphe transparent. On trouve ainsi une largeur l, ou dimension moyenne en nombre, ainsi qu'une longueur L égales à 60 nm pour ces nanoparticules. Selon l'analyse MET et par mesures directes, le facteur de forme L/l de ces nanoparticules est donc de l'ordre de 1,0.

Préalablement à la préparation des matériaux polymères, les nanoparticules minérales et le polycarbonate, le polyméthacrylate de méthyle et le polystyrène utilisés dans les exemples qui vont suivre ont été placés à l'étuve à 120°C, pendant au moins 12h

On réalise différents échantillons à partir desdits matériaux polymères extrudés sous forme de jonc, refroidis et mis sous forme de granulés.

Les étapes de mélange détaillées dans les procédés de préparation P0 à P4 qui vont suivre sont effectuées grâce à une microextrudeuse du type bi-vis à recirculation référencée DSM micro 15 et commercialisée par la société DSM Explore, avec un taux de cisaillement de 40 tours par minute.

### Exemple 1 : procédé de préparation P0 conforme à l'art antérieur : incorporation directe de nanoparticules à une matrice PC :

Selon un procédé de préparation P0 conforme à l'art antérieur, 0,45 g de nanoparticules minérales et 8,55 g de polycarbonate sont mélangés à 260°C pendant 14 minutes.

On obtient ainsi un matériau polymère MP0 comprenant 5 % en masse de nanoparticules minérales.

### Exemple 2 : procédé de préparation P1 conforme à l'invention :

Selon un premier procédé de préparation P1 conforme à la présente invention, on mélange (étape i) 4,5 g de nanoparticules minérales avec 4,5 g de polystyrène (PS) ou de polycarbonate (PC), à 260°C pendant environ 5 minutes, pour obtenir des mélange-maîtres respectifs. Puis, on mélange (étape ii) 0,9 g de chaque mélange-maître à 8,1 g d'une matrice de polycarbonate, à 260°C pendant 15 minutes. On obtient ainsi un matériau polymère MP1_{PS} lorsque le polymère du mélange i est le PS et un matériau polymère MP1_{PC} lorsque le polymère du mélange i est le PC.

Les matériaux polymères obtenus (MP1_{PS}, et MP1_{PC}) comprennent 5 % en masse de nanoparticules minérales.

### Exemple 3 : procédé de préparation P2 conforme à l'invention :

Selon un second procédé de préparation P2 conforme à la présente invention, on mélange (étape i) 4,5 g de nanoparticules minérales avec 4,5 g de polystyrène (PS) ou de polyméthacrylate de méthyle (PMMA) ou d'une composition A2 comprenant un polycarbonate (PC) et un antioxydant, à 260°C pendant 5 minutes, pour obtenir des mélange-maîtres respectifs.

Dans ce cadre, ladite composition A2 est préparée préalablement à l'étape i en mélangeant, à 260°C pendant 5 minutes, 90 parties en poids de polycarbonate et 10 parties en poids d'antioxydant pour 100 parties en poids de la composition A2.

Une composition B2 est préparée en mélangeant, à 260°C pendant 3 minutes, 98,9 parties en poids de polycarbonate et 1,1 parties en poids d'antioxydant pour 100 parties en poids de la composition B2. Puis, on mélange (étape ii) 0,9 g de chaque mélange-maître à 8,1 g de la composition B2, à 260°C pendant 10 minutes, afin de bien disperser les nanoparticules dans lesdits mélanges. On obtient un matériau polymère MP2_{PS} lorsque le polymère du mélange i est le PS, un matériau polymère MP2_{PMMA} lorsque le polymère du mélange i est le PMMA et un matériau polymère MP2_{PC} lorsque le polymère du mélange i est le PC.

Les matériaux polymères obtenus (MP2_{PS}, MP2_{PMMA}, MP2_{PC}) comprennent 5 % en masse de nanoparticules minérales.

### Exemple 4 : procédé de préparation P3 conforme à l'invention :

Selon un troisième procédé de préparation P3 conforme à la présente invention, on mélange (étape i) 4,5 g de nanoparticules minérales avec 4,5 g de polystyrène (PS), à 260°C pendant 5 minutes, pour obtenir un mélange-maître. On prépare une composition B3 en mélangeant, à 260°C pendant 3 minutes, 97,8 parties en poids de polycarbonate, 1,1 parties en poids d'antioxydant et 1,1 parties en poids d'agent compatibilisant de type polymérique AgCp1 pour 100 parties en poids de composition B3. Puis, on mélange (étape ii) 0,9 g du mélange-maitre à 8,1 g de la composition B3, à 260°C pendant 11 minutes, afin de bien disperser les nanoparticules dans ledit mélange.

On obtient un matériau polymère MP3_{AgCp1} comprenant 5 % en masse de nanoparticules minérales.

### Exemple 5 : procédé de préparation P4 conforme à l'invention :

Selon un quatrième procédé de préparation P4 conforme à la présente invention, on mélange (étape i) 4,5 g de nanoparticules minérales avec 4,5 g de polyméthacrylate de méthyle (PMMA), à 260°C pendant 5 minutes, pour obtenir un mélange-maître.

On prépare une composition B4 en mélangeant, à 260°C pendant 3 minutes, 98,9 parties en poids de polycarbonate, et 1,1 parties en poids d'antioxydant pour 100 parties en poids de composition B4. Puis, on mélange (étape ii) 0,9 g dudit mélange-maître à 0,03 g d'un agent compatibilisant du type minéral AgCm1 ou AgCm2, et à 8,07 g de la composition B4, à 260°C pendant 11 minutes, afin de bien disperser les nanoparticules dans ledit mélange. On obtient un matériau polymère MP4_{AgCm1} lorsque l'agent compatibilisant du type polymérique est AgCm1, et un matériau polymère MP4_{AgCm2}, lorsque l'agent compatibilisant du type polymérique est AgCm2.

Les différents matériaux polymères obtenus (MP4_{AgCm1}, MP4_{AgCm2}) comprennent 5 % en masse de nanoparticules minérales.

### Caractéristiques physicochimiques des matériaux obtenus :

Les différentes caractéristiques physicochimiques étudiées sont la transmission lumineuse, le module de flexion, et le poids moléculaire.

Un matériau dit de référence (MR) est en outre réalisé uniquement à partir du polycarbonate utilisé dans les différents procédés P0 à P4, sous forme d'échantillons.

### Transmission lumineuse :

La transmission lumineuse caractérise la transparence du matériau polymère. Plus la transmission lumineuse est élevée, meilleure est la transparence dudit matériau.

Les mesures de transmission lumineuse sont réalisées sur des échantillons en forme de disque de 25 mm de diamètre et de 1,5 mm d'épaisseur à l'aide d'un spectromètre Cary 50 commercialisé par la société Varian. Les disques sont obtenus à partir des granulés des matériaux polymères MR et MP0 à MP4 mis en forme par injection-moulage à l'aide d'une micro-injecteuse DSM 5 cm³ commercialisée par la société DSM Explore. La température du cylindre de la micro-injecteuse est fixée à 290°, et la température du moule est fixée à 60°C, le temps de chauffe des granulés avant injection étant de 2 minutes.

### Poids Moléculaire :

Les mesures de poids moléculaire sont réalisées sur des échantillons sous forme de poudres. La poudre est obtenue par broyage des granulés des matériaux polymères MR et MP0 à MP4 à l'aide d'une broyeuse cryogénique. Une quantité de 50 mg de ladite poudre est ensuite mise en solution dans 10 mL de Tétrahydrofurane (THF), puis filtrée à 0,45 µm.

Le poids moléculaire est déterminé grâce à un chromatographe muni d'une pompe Waters SIS-HPLC, d'un réfractomètre différentiel Waters 410, de colonnes Styragel 5 µm HR4 et HR3 commercialisées par la société Waters, et d'une colonne Pl-gel 5 µm commercialisée par la société Polymer Laboratories. Le logiciel de traitement des mesures est le logiciel Millenium 32 commercialisé par la société Waters.

### Module de flexion :

Le module de flexion caractérise la rigidité du matériau polymère. Plus le module de flexion est élevé, meilleure est la rigidité dudit matériau.

Les mesures de module de flexion sont réalisées sur des échantillons sous forme de barreaux de taille 4 mm x 40 mm x 1,5 mm.
Les barreaux sont obtenus à partir des granulés des matériaux polymères MR et MP0 à MP4 mis en forme à l'aide d'une presse de thermo-compression hydraulique à plateaux chauffants de marque DARRAGON. Le module de flexion desdits barreaux est déterminé grâce à un visco-analyseur VA4000 commercialisé par la société Metravib.

L'échantillon est amené à une température de 30°C, à une vitesse de chauffe de 3°C/min. Puis la mesure du module est réalisée sur un palier de température à 30°C pendant 10 minutes. La fréquence d'oscillation appliquée est de 1Hz et le déplacement dynamique (amplitude des oscillations) est de 5 µm.

Les résultats obtenus sont rassemblés dans le Tableau ci-après. Les valeurs de transmission sont données pour une longueur d'onde de 650 nm.

| **Procédé de préparation** | **Matériau polymère** | **Transmission lumineuse (%)** | **Poids Moléculaire (g.mol⁻¹)** | **Module de flexion (GPa)** |
|---|---|---|---|---|
| **/** | MR | **87.8** | **52500** | **2,35** |
| **P0** | MP0 | **19.4** | **22400** | **NM*** |
| **P1** | MP1_{PC} | **65.2** | **36200** | **2,61** |
| | MP1_{PS} | **65.9** | **50700** | **2,96** |
| **P2** | MP2_{PC} | **68.4** | **47300** | **3,11** |
| | MP2_{PS} | **72.2** | **49700** | **2,94** |
| | MP2_{PMMA} | **71.1** | **47200** | **2,92** |
| **P3** | MP3_{AgCp1} | **65.2** | **50700** | **3,28** |
| **P4** | MP4_{AgCm1} | **71.0** | **46500** | **2,92** |
| | MP4_{AgCm2} | **70.0** | **45300** | **3,45** |

| | | | | |
|---|---|---|---|---|
| * NM : non mesuré car trop cassant | | | | |

On constate ainsi que les procédés P1 à P4, par rapport à une incorporation directe selon le procédé P0, permettent de réduire significativement la perte de transmission lumineuse induite par la présence des nanoparticules. La perte de transmission lumineuse des matériaux polymères MP1 à MP4 par rapport au matériau de référence MR est au plus de 25 % par rapport au matériau de référence MR. Le matériau polymère MP0 présente quant à lui une perte de transmission de plus de 40 % par rapport au matériau de référence MR. Les matériaux polymères MP1 à MP4 présentent ainsi une transparence très satisfaisante.

On constate également que les valeurs du module de flexion des matériaux polymères MP1 à MP0 présentent une augmentation significative dudit module par rapport à la valeur du module de flexion du matériau de référence MR. L'incorporation des nanoparticules selon les procédés de préparation conforme à la présente invention, permet donc d'améliorer fortement, de plus de 20 %, la rigidité des matériaux polymères.

D'autre part, on constate que les matériaux polymères MP1 à MP4 présentent un poids moléculaire qui tend de façon significative vers la valeur 52500 g.mol⁻¹, valeur du poids moléculaire du matériau de référence MR, contrairement au matériau polymère MP0 dont la valeur chute de plus de 50 %. Une chute trop importante du poids moléculaire, c'est-à-dire supérieure à 30 %, est significative d'une dégradation importante de la matrice.

Par ailleurs, les matériaux polymères MP2 montrent que l'ajout d'un antioxydant indirectement au mélange de l'étape ii (procédés P2, P3 et P4) améliore de façon significative les caractéristiques physicochimiques desdits matériaux.

Enfin, l'utilisation d'un agent compatibilisant permet également d'optimiser le module de flexion, notamment permet d'atteindre une augmentation dudit module d'environ 46 % (MP4_{AgCm2}).

Ainsi, les résultats du Tableau ci-avant montrent que les procédés de préparation P1 à P4 permettent d'obtenir des matériaux polymères transparents MP1 à MP4 présentant une transparence optimale tout en ayant des propriétés mécaniques améliorées.

## Revendications

1. Procédé de préparation d'un matériau polymère transparent comprenant les étapes suivantes :
i. mélanger :
- des nanoparticules minérales, dont la dimension est définie dans la description, choisies parmi les nanoparticules de carbonates de métaux alcalino-terreux, de sulfates de métaux alcalino-terreux, d'oxydes métalliques, de dioxyde de silicium, et de siloxanes, et
- une composition A comprenant au moins un polymère thermoplastique à l'état fondu choisi parmi le polycarbonate (PC), le polystyrène (PS) et le polyméthacrylate de méthyle (PMMA),
pour obtenir un mélange-maître, le mélange de l'étape i comprenant au moins 25 % et au plus 75 % en masse desdites nanoparticules minérales, et
ii. mélanger le mélange-maître, obtenu à l'étape i, à une composition B comprenant une matrice de polycarbonate thermoplastique (mPC) à l'état fondu, pour obtenir un matériau polymère transparent comprenant au plus 10 % en masse desdites nanoparticules minérales, de préférence au plus 5 % en masse desdites nanoparticules minérales.

2. Procédé selon la revendication 1, **caractérisé en ce que** le mélange de l'étape i comprend au moins 40 % et au plus 60 % en masse desdites nanoparticules minérales.

3. Procédé selon la revendication 1 ou 2, **caractérisé en ce que** la dimension des nanoparticules minérales est d'au plus 300 nm, de préférence d'au plus 100 nm, et plus préférentiellement comprise entre 10 et 70 nm.

4. Procédé selon la revendication 3, **caractérisé en ce que** les nanoparticules minérales sont choisies parmi des nanoparticules de carbonate de calcium, de sulfate de baryum, d'alumine, de Trisilanolphényl Polyhedral SilSesquioxane (TP-POSS), d'oxyde de zinc, de dioxyde de silicium et/ou de dioxyde de titane.

5. Procédé selon l'une quelconque des revendications précédentes, **caractérisé en ce que** le mélange de l'étape ii comprend en outre au moins un antioxydant.

6. Procédé selon la revendication 5, **caractérisé en ce que** la composition B est préparée préalablement à l'étape ii en mélangeant un antioxydant avec la matrice de polycarbonate thermoplastique (mPC) à l'état fondu.

7. Procédé selon la revendication 6, **caractérisé en ce que** la composition B comprend au plus 5 % en masse d'antioxydant, et de préférence entre 0,5 et 2 % en masse d'antioxydant.

8. Procédé selon l'une quelconque des revendications 5 à 7, **caractérisé en ce que** la composition A est préparée préalablement à l'étape i en mélangeant un antioxydant avec le polymère thermoplastique à l'état fondu.

9. Procédé selon la revendication 8, **caractérisé en ce que** la composition A comprend au plus 15 % en masse d'antioxydant, de préférence entre 2 % et 12 % en masse d'antioxydant, et plus préférentiellement 10 % en masse d'antioxydant.

10. Procédé selon l'une quelconque des revendications 5 à 9, **caractérisé en ce qu'**un antioxydant est ajouté directement au mélange de l'étape ii et/ou au mélange de l'étape i.

11. Procédé selon l'une quelconque des revendications 5 à 10, **caractérisé en ce que** le mélange de l'étape ii comprend au plus 5 % en masse d'antioxydant, et de préférence comprise entre 1 et 2 % en masse d'antioxydant.

12. Procédé selon l'une quelconque des revendications 5 à 11, **caractérisé en ce que** l'antioxydant comprend un phosphite.

13. Procédé selon l'une quelconque des revendications précédentes, **caractérisé en ce que** le mélange de l'étape ii comprend en outre un agent compatibilisant, lorsque le mélange de l'étape i comprend le polystyrène (PS) et/ou le polyméthacrylate de méthyle (PMMA).

14. Procédé selon la revendication 13, **caractérisé en ce que** l'agent compatibilisant est une montmorillonite naturelle modifiée en surface avec des groupements fonctionnels du type hydroxyles.

15. Procédé selon la revendication 13, **caractérisé en ce que** l'agent compatibilisant est un copolymère de polystyrène et d'anhydride maléique.

16. Procédé selon l'une quelconque des revendications 13 à 15, **caractérisé en ce que** le mélange de l'étape ii comprend au plus 5 % en masse d'agent compatibilisant, de préférence entre 0,1 et 2 % en masse d'agent comptabilisant, et encore plus préférentiellement entre 0,3 % et 1 % en masse d'agent compatibilisant.

## Patentansprüche

1. Verfahren zur Herstellung eines transparenten Polymermaterials, umfassend die folgenden Schritte:
i. Mischen:
- von mineralischen Nanopartikeln, deren Größe in der Beschreibung definiert ist, ausgewählt aus Nanopartikeln von Erdalkalimetallcarbonaten, Erdalkalimetallsulfaten, Metalloxiden, Siliciumdioxid und Siloxanen, und
- einer Zusammensetzung A, umfassend mindestens ein thermoplastisches Polymer in geschmolzenem Zustand, ausgewählt aus Polycarbonat (PC), Polystyrol (PS) und Polymethylmethacrylat (PMMA),
um ein Masterbatch zu erhalten, wobei das Gemisch aus Schritt i mindestens 25 Gew.-% und höchstens 75 Gew.-% der mineralischen Nanopartikel umfasst, und
ii. Mischen des in Schritt i erhaltenen Masterbatch mit einer Zusammensetzung B, die eine thermoplastische Polycarbonatmatrix (mPC) in geschmolzenem Zustand umfasst, um ein transparentes Polymermaterial zu erhalten, das höchstens 10 Gew.-% der mineralische Nanopartikel, vorzugsweise höchstens 5 Gew.-% der mineralische Nanopartikel umfasst.

2. Verfahren nach Anspruch 1, **dadurch gekennzeichnet, dass** das Gemisch aus Schritt i mindestens 40 Gew.-% und höchstens 60 Gew.-% der mineralischen Nanopartikel umfasst.

3. Verfahren nach Anspruch 1 oder 2, **dadurch gekennzeichnet, dass** die Größe der mineralischen Nanopartikel höchstens 300 nm, vorzugsweise höchstens 100 nm beträgt und bevorzugter im Bereich zwischen 10 und 70 nm liegt.

4. Verfahren nach Anspruch 3, **dadurch gekennzeichnet, dass** die mineralischen Nanopartikel ausgewählt sind aus Nanopartikeln von Calciumcarbonat, Bariumsulfat, Aluminiumoxid, polyedrischem Trisilanolphenyl-Silsesquioxan (TP-POSS), Zinkoxid, Siliciumdioxid und/oder Titandioxid.

5. Verfahren nach einem der vorhergehenden Ansprüche, **dadurch gekennzeichnet, dass** das Gemisch aus Schritt ii ferner mindestens ein Antioxidationsmittel umfasst.

6. Verfahren nach Anspruch 5, **dadurch gekennzeichnet, dass** die Zusammensetzung B vor Schritt ii durch Mischen eines Antioxidationsmittels mit der thermoplastischen Polycarbonatmatrix (mPC) in geschmolzenem Zustand hergestellt wird.

7. Verfahren nach Anspruch 6, **dadurch gekennzeichnet, dass** die Zusammensetzung B höchstens 5 Gew.-% Antioxidationsmittel und vorzugsweise zwischen 0,5 und 2 Gew.-% Antioxidationsmittel umfasst.

8. Verfahren nach einem der Ansprüche 5 bis 7, **dadurch gekennzeichnet, dass** die Zusammensetzung A vor dem Schritt i durch Mischen eines Antioxidationsmittels mit dem thermoplastischen Polymer in geschmolzenem Zustand hergestellt wird.

9. Verfahren nach Anspruch 8, **dadurch gekennzeichnet, dass** die Zusammensetzung A höchstens 15 Gew.-% Antioxidationsmittel, vorzugsweise zwischen 2 Gew.-% und 12 Gew.-% Antioxidationsmittel und bevorzugter 10 Gew.-% Antioxidationsmittel umfasst.

10. Verfahren nach einem der Ansprüche 5 bis 9, **dadurch gekennzeichnet, dass** ein Antioxidationsmittel direkt zu dem Gemisch aus Schritt ii und/oder zu dem Gemisch aus Schritt i gegeben wird.

11. Verfahren nach einem der Ansprüche 5 bis 10, **dadurch gekennzeichnet, dass** das Gemisch aus Schritt ii höchstens 5 Gew.-% Antioxidationsmittel und vorzugsweise im Bereich zwischen 1 und 2 Gew.-% Antioxidationsmittel umfasst.

12. Verfahren nach einem der Ansprüche 5 bis 11, **dadurch gekennzeichnet, dass** das Antioxidationsmittel ein Phosphit umfasst.

13. Verfahren nach einem der vorhergehenden Ansprüche, **dadurch gekennzeichnet, dass** das Gemisch aus Schritt ii ferner ein Kompatibilisierungsmittel umfasst, wenn das Gemisch aus Schritt i Polystyrol (PS) und/oder Polymethylmethacrylat (PMMA) umfasst.

14. Verfahren nach Anspruch 13, **dadurch gekennzeichnet, dass** das Kompatibilisierungsmittel ein natürlicher Montmorillonit ist, der an der Oberfläche mit funktionellen Hydroxylgruppen modifiziert ist.

15. Verfahren nach Anspruch 13, **dadurch gekennzeichnet, dass** das Kompatibilisierungsmittel ein Polystyrol-Maleinsäureanhydrid-Copolymer ist.

16. Verfahren nach einem der Ansprüche 13 bis 15, **dadurch gekennzeichnet, dass** das Gemisch aus Schritt ii höchstens 5 Gew.-% Kompatibilisierungsmittel, vorzugsweise zwischen 0,1 und 2 Gew.-% Kompatibilisierungsmittel und noch bevorzugter zwischen 0,3 Gew.-% und 1 Gew.-% Kompatibilisierungsmittel umfasst.

## Claims

1. Process for the preparation of a transparent polymer material comprising the following stages:
i. mixing:
- inorganic nanoparticles, the size of which is defined in the description, chosen from alkaline earth metal carbonate, alkaline earth metal sulfate, metal oxide, silicon dioxide and siloxane nanoparticles, and
- a composition A comprising at least one thermoplastic polymer in the molten state chosen from polycarbonate (PC), polystyrene (PS) and polymethyl methacrylate (PMMA),
in order to obtain a masterbatch, the mixture of stage i comprising at least 25% and at most 75% by weight of the said inorganic nanoparticles, and
ii. mixing the masterbatch, obtained in stage i, with a composition B comprising a molten thermoplastic polycarbonate (mPC) matrix, in order to obtain a transparent polymer material comprising at most 10% by weight of the said inorganic nanoparticles, preferably at most 5% by weight of the said inorganic nanoparticles.

2. Process according to Claim 1, **characterized in that** the mixture of stage i comprises at least 40% and at most 60% by weight of the said inorganic nanoparticles.

3. Process according to Claim 1 or 2, **characterized in that** the size of the inorganic nanoparticles is at most 300 nm, preferably at most 100 nm and more preferably between 10 and 70 nm.

4. Process according to Claim 3, **characterized in that** the inorganic nanoparticles are chosen from calcium carbonate, barium sulfate, alumina, trisilanol phenyl polyhedral silsesquioxane (TP-POSS), zinc oxide, silicon dioxide and/or titanium dioxide nanoparticles.

5. Process according to any one of the preceding claims, **characterized in that** the mixture of stage ii additionally comprises at least one antioxidant.

6. Process according to Claim 5, **characterized in that** the composition B is prepared prior to stage ii by mixing an antioxidant with the molten thermoplastic polycarbonate (mPC) matrix.

7. Process according to Claim 6, **characterized in that** the composition B comprises at most 5% by weight of antioxidant and preferably between 0.5% and 2% by weight of antioxidant.

8. Process according to any one of Claims 5 to 7, **characterized in that** the composition A is prepared prior to stage i by mixing an antioxidant with the molten thermoplastic polymer.

9. Process according to Claim 8, **characterized in that** the composition A comprises at most 15% by weight of antioxidant, preferably between 2% and 12% by weight of antioxidant and more preferably 10% by weight of antioxidant.

10. Process according to any one of Claims 5 to 9, **characterized in that** an antioxidant is added directly to the mixture of stage ii and/or to the mixture of stage i.

11. Process according to any one of Claims 5 to 10, **characterized in that** the mixture of stage ii comprises at most 5% by weight of antioxidant and preferably between 1 and 2% by weight of antioxidant.

12. Process according to any one of Claims 5 to 11, **characterized in that** the antioxidant comprises a phosphite.

13. Process according to any one of the preceding claims, **characterized in that** the mixture of stage ii additionally comprises a compatibilizing agent, when the mixture of stage i comprises polystyrene (PS) and/or polymethyl methacrylate (PMMA).

14. Process according to Claim 13, **characterized in that** the compatibilizing agent is a natural montmorillonite modified at the surface with functional groups of the hydroxyl type.

15. Process according to Claim 13, **characterized in that** the compatibilizing agent is a copolymer of polystyrene and maleic anhydride.

16. Process according to any one of Claims 13 to 15, **characterized in that** the mixture of stage ii comprises at most 5% by weight of compatibilizing agent, preferably between 0.1% and 2% by weight of compatibilizing agent and more preferably still between 0.3% and 1% by weight of compatibilizing agent.
